# EUROPÄISCHE PATENTSCHRIFT

(11) **EP 2 411 653 B1**
(45) Veröffentlichungstag und Bekanntmachung des Hinweises auf die Patenterteilung: **06.08.2014**
(21) Anmeldenummer: 10708767.8
(22) Anmeldetag: 12.03.2010
(51) Int. Cl.: F02M 25/08

(54) **TANKENTLÜFTUNGSVORRICHTUNG FÜR EINE AUFGELADENE BRENNKRAFTMASCHINE UND ZUGEHÖRIGES STEUERVERFAHREN**
TANK VENTILATION DEVICE FOR A CHARGED INTERNAL COMBUSTION ENGINE AND CONTROL METHOD THEREOF
DISPOSITIF D'ÉVACUATION D'AIR DU RÉSERVOIR POUR UN MOTEUR À COMBUSTION INTERNE AYANT UN DISPOSITIF DE SURALIMENTATION ET SON PROCÉDÉ DE CONTRÔLE

(30) Priorität: 23.03.2009 DE 102009014444
(43) Veröffentlichungstag der Anmeldung: 01.02.2012
(73) Patentinhaber: Continental Automotive GmbH, 30165 Hannover (DE)
(72) Erfinder: MAI, Wolfgang, 61476 Kronberg (DE)
(86) Internationale Anmeldenummer: PCT/EP2010/053209
(87) Internationale Veröffentlichungsnummer: WO 2010/108798

(56) Entgegenhaltungen:
- DE-A1-102006 016 339
- DE-A1-102007 040 913
- FR-A1- 2 843 423
- US-A1- 2004 237 946

## Beschreibung

Die vorliegende Erfindung betrifft eine Tankentlüftungsvorrichtung für eine aufgeladene Brennkraftmaschine, sowie ein Steuerverfahren für diese Tankentlüftungsvorrichtung.

Zur Begrenzung der Schadstoffemissionen sind moderne Kraftfahrzeuge mit einer Tankentlüftungsvorrichtung ausgestattet, in welcher die dem Kraftstofftank entweichenden Kraftstoffdämpfe gespeichert werden. Bestandteil der Tankentlüftungsvorrichtung ist ein Kraftstoffdämpfespeicher, in welchem die Kraftstoffdämpfe adsorbiert werden. Ist die Beladungsgrenze des Kraftstoffdämpfespeichers erreicht, muss dieser durch einen Tankentlüftungsvorgang regeneriert werden. Dazu ist der Kraftstoffdämpfespeicher über eine Entlüftungsleitung mit dem Saugrohr der Brennkraftmaschine verbunden. In der Entlüftungsleitung ist ein steuerbares Tankentlüftungsventil angeordnet, welches zur Durchführung des Tankentlüftungsvorgangs geöffnet wird, so dass die im Kraftstoffdämpfespeicher adsorbierten Kraftstoffdämpfe aufgrund des Unterdrucks im Saugrohr in dieses entweichen und an der Verbrennung teilnehmen. Ein Tankentlüftungsvorgang ist demnach nur dann möglich, wenn im Saugrohr gegenüber der Tankentlüftungsvorrichtung ein Unterdruck herrscht. Bei aufgeladenen Brennkraftmaschinen herrscht im aufgeladenen Betriebszustand im Saugrohr ein höherer Druck als in der Tankentlüftungsvorrichtung. Zum Schutze des Tankentlüftungsventils ist deshalb häufig in der Entlüftungsleitung zwischen dem Tankentlüftungsventil und dem Saugrohr ein Sicherheitsventil in Form eines Rückschlagventils angeordnet. Dieses Sicherheitsventil verhindert jegliche Gasströmung vom Saugrohr in Richtung des Tankentlüftungsventils und schützt das Tankentlüftungsventil dadurch vor einer zu starken Druckbelastung.

Weitergehende, gesetzliche Vorschriften schreiben vor, die Tankentlüftungsvorrichtung auf Dichtheit zu überprüfen. Ein bekanntes Verfahren sieht deshalb vor, die natürliche Unterdruckbildung in der Tankentlüftungsvorrichtung bei Abkühlung zu nutzen, um die Dichtigkeit zu prüfen (NVLD - Natural Vacuum Leak Detection). Dazu weist die Tankentlüftungsvorrichtung gewöhnlich entweder einen Drucksensor oder einen Druckschalter auf, welche das Druckniveau in der Tankentlüftungsvorrichtung anzeigen. Die Funktionsweise dieses Druckschalters muss nach gesetzlichen Vorschriften überprüft werden.

Tankentlüftungsvorrichtungen gemäß dem Oberbegriff des Anspruch 1 sind aus DE 102 006 016 339 A und DE 102 007 040 913 bekannt.

Es ist die Aufgabe der folgenden Erfindung eine Tankentlüftungsvorrichtung und ein zugehöriges Steuerverfahren für diese Tankentlüftungsvorrichtung bereitzustellen, mittels denen eine Funktionsüberprüfung der Tankentlüftungsvorrichtung auch bei aufgeladenen Brennkraftmaschinen leicht durchführbar ist.

Diese Aufgabe wird durch die Gegenstände der unabhängigen Ansprüche gelöst. Vorteilhafte Ausgestaltungen der Erfindung sind Gegenstand der abhängigen Ansprüche.

Eine Tankentlüftungsvorrichtung für eine aufgeladene Brennkraftmaschine gemäß dem Anspruch 1 weist einen Kraftstofftank und einen Kraftstoffdämpfespeicher auf, welcher über eine Verbindungsleitung mit dem Kraftstofftank und über eine Entlüftungsleitung mit einem Saugrohr der Brennkraftmaschine verbunden ist. Ferner umfasst die Tankentlüftungsvorrichtung ein Tankentlüftungsventil, welches in der Entlüftungsleitung angeordnet ist. Die Tankentlüftungsvorrichtung umfasst ferner ein Sicherheitsventil, welches in der Entlüftungsleitung zwischen dem Tankentlüftungsventil und dem Saugrohr angeordnet ist, wobei das Sicherheitsventil derart ausgestaltet ist, dass es einen Gasdurchfluss in einer Sperrrichtung vom Saugrohr zum Tankentlüftungsventil bis zum Erreichen eines bestimmten Überdrucks im Saugrohr gegenüber dem Druck am Tankentlüftungsventil zulässt.

Im Unterschied zu der aus dem Stand der Technik bekannten Tankentlüftungsvorrichtung weist die erfindungsgemäße Tankentlüftungsvorrichtung ein Sicherheitsventil auf, welches auch bis zum Erreichen eines bestimmten Überdrucks im Saugrohr einen Gasfluss in Richtung des Tankentlüftungsventils zulässt. Dadurch kann beispielsweise bei abgeschalteter Brennkraftmaschine durch öffnen des Tankentlüftungsventils ein Druckausgleich zwischen dem Saugrohr und der Tankentlüftungsvorrichtung erreicht werden (bei den aus dem Stand der Technik bekannten Sicherheitsventilen wird dagegen jeglicher Gasstrom vom Saugrohr in Richtung zum Tankentlüftungsventil unterbunden). Durch die Herstellung dieses Druckausgleiches kann die Funktionalität eines in der Tankentlüftungsvorrichtung angeordneten Druckschalters zur Dichtheitsüberprüfung verifiziert werden. Bezüglich der genauen Vorgehensweise wird hierbei auf die Beschreibung des Verfahrens auf Anspruch 2 verwiesen. Da das Sicherheitsventil den Gasdurchfluss in Richtung des Tankentlüftungsventils jedoch nur bis zum Erreichen eines bestimmten Überdrucks im Saugrohr gegenüber dem Druck am Tankentlüftungsventil zulässt, bei einem höheren Überdruck den Gasdurchfluss in Richtung des Tankentlüftungsventils jedoch unterbindet, ist ein gleichzeitig ein ausreichender Schutz des Tankentlüftungsventils durch eine zu hohe Druckbelastung gewährleistet. Durch die erfindungsgemäße Tankentlüftungsvorrichtung ist demnach der Bauteilschutz des Tankentlüftungsventils und auch weiterer Komponenten der Tankentlüftungsvorrichtung sichergestellt. Gleichzeitig ist eine Funktionsüberprüfung eines in der Tankentlüftungsvorrichtung angeordneten Druckschalters zur Dichtheitsüberprüfung möglich.

Gegenstand des Anspruchs 2 ist ein Verfahren zum Steuern einer aufgeladenen Brennkraftmaschine mit einer Tankentlüftungsvorrichtung gemäß dem Anspruch 1. Demnach wird nach dem Abschalten der Brennkraftmaschine das Tankentlüftungsventil derart geöffnet, dass ein Druckausgleich zwischen dem Kraftstofftank und dem Saugrohr ermöglicht wird. Es wird die Stellung eines Druckschalters der Tankentlüftungsvorrichtung erfasst, welcher derart ausgebildet ist, dass er sich bei einem erfolgten Druckausgleich zwischen dem Kraftstofftank und dem Saugrohr in einer Hochdruckschaltstellung befindet. Ein Defekt des Druckschalters wird erkannt, falls sich dieser nach dem Öffnen des Tankentlüftungsventils nicht in der Hochdruckschaltstellung befindet.

Die Durchführung dieses Verfahrens bei einer aufgeladenen Brennkraftmaschine mit einer Tankentlüftungsvorrichtung gemäß dem Anspruch 1 ist eine Funktionsüberprüfung des Druckschalters bei einem Stillstand der Brennkraftmaschine sehr leicht möglich. Der Druckschalter ist derart konstruiert, dass er sich in einem fehlerfreien Zustand in einer Hochdruckschaltstellung befindet, wenn der Druck in der Tankentlüftungsvorrichtung in etwa Umgebungsdruck aufweist. Da sich im Saugrohr bei Stillstand der Brennkraftmaschine nach gewisser Zeit Umgebungsdruck einstellt, kann durch Öffnen des Tankentlüftungsventils ein Druckausgleich zwischen dem Saugrohr und der Tankentlüftungsvorrichtung erreicht werden, da das derart ausgebildete Sicherheitsventil einen Gasdurchfluss vom Saugrohr über das geöffnete Tankentlüftungsventil bis in den Tank und in den Kraftstoffdämpfespeicher erlaubt. Befindet sich der Druckschalter nach erfolgtem Druckausgleich nicht in der Hochdruckschaltstellung, so kann der Druckschalter als defekt deklariert werden.

Bei einer Ausgestaltung des Verfahrens nach Anspruch 3 wird ein Defekt des Druckschalters nur dann erkannt, wenn er sich nach Ablauf einer vorgegebenen Zeitspanne nach Öffnen des Tankentlüftungsventils nicht in der Hochdruckschaltstellung befindet.

Der Druckausgleich zwischen dem Saugrohr und der Tankentlüftungsvorrichtung nimmt eine gewisse Zeit in Anspruch. Um Fehldiagnosen zu vermeiden, wird die Beurteilung der Funktionsfähigkeit des Druckschalters erst nach Ablauf einer bestimmten Zeitspanne nach dem Öffnen des Tankentlüftungsventils durchgeführt.

In einer Ausgestaltung des Verfahrens nach Anspruch 4 wird das Tankentlüftungsventil nicht geöffnet, wenn sich der Druckschalter vor dem Öffnen des Tankentlüftungsventils bereits in der Hochdruckschaltstellung befindet.

Befindet sich der Druckschalter bereits in der Hochdruckschaltstellung, ist erstens eine Plausibilisierung der Funktionsfähigkeit des Druckschalters nicht möglich, da ein Umschaltvorgang in die Hochdruckschaltstellung nach Öffnen des Tankentlüftungsventils nicht mehr erreicht werden kann. Ferner könnte sein, dass in der Tankentlüftungsvorrichtung ein Überdruck herrscht, so dass beim Öffnen des Tankentlüftungsventils Kraftstoffdämpfe in das Saugrohr und somit in die Umgebung gelangen könnten.

Im Folgenden wird die Erfindung anhand der beigefügten Figuren näher erläutert. In den Figuren sind:
Figur 1 eine schematische Darstellung einer aufgeladenen Brennkraftmaschine mit einer Tankentlüftungsvorrichtung;
Figur 2 ein Ausführungsbeispiel eines Sicherheitsventils der Tankentlüftungsvorrichtung;
Figur 3 eine schematische Kennlinie des Sicherheitsventils;
Figur 4 ein Ausführungsbeispiel eines Steuerverfahrens in Form eines Ablaufdiagramms.

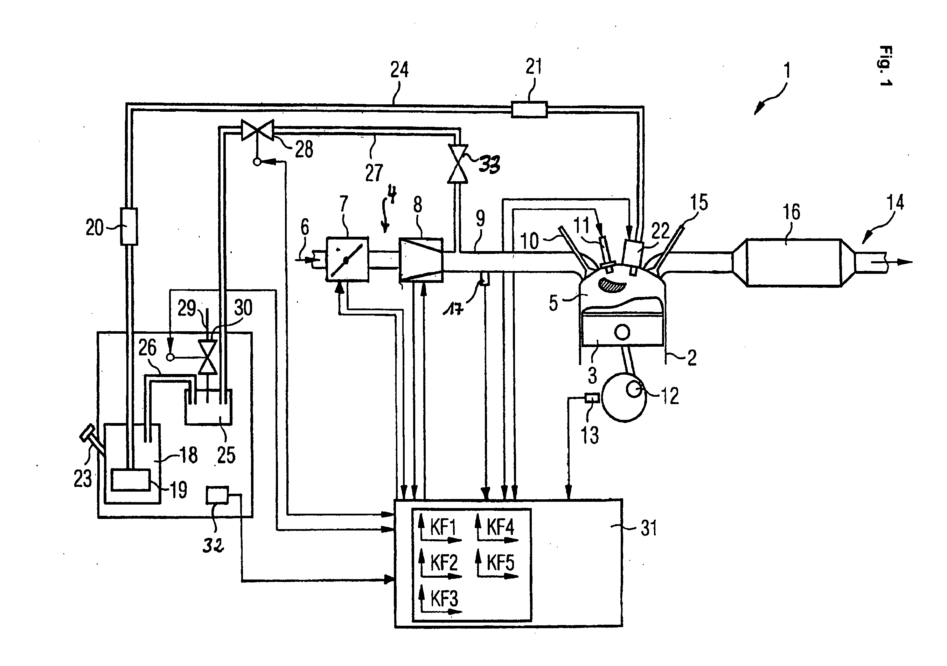

In Figur 1 ist ein Ausführungsbeispiel einer aufgeladenen Brennkraftmaschine 1 dargestellt. Die Brennkraftmaschine 1 weist mindestens einen Zylinder 2 und einen in dem Zylinder 2 auf und ab beweglichen Kolben 3 auf. Die zur Verbrennung nötige Frischluft wird über einen Ansaugtrakt 4 in einen von dem Zylinder 2 und dem Kolben 3 begrenzten Brennraum 5 eingeleitet. Stromabwärts einer Ansaugöffnung 6 befinden sich in dem Ansaugtrakt 4 eine Drosselklappe 7 zur Steuerung des Luftdurchsatzes, ein Verdichter 8 eines Turboladers oder eines Kompressors, ein Saugrohr 9, ein Saugrohrdrucksensor 17 und ein Einlassventil 10, mittels dem der Brennraum 5 mit dem Ansaugtrakt 4 wahlweise verbunden oder getrennt wird.

Die Auslösung der Verbrennung geschieht mittels einer Zündkerze 11. Die durch die Verbrennung erzeugte Antriebsenergie wird über eine Kurbelwelle 12 an den Antriebsstrang eines Kraftfahrzeuges (nicht dargestellt) übertragen. Ein Drehzahlsensor 13 erfasst die Drehzahl der Brennkraftmaschine 1.

Die Verbrennungsabgase werden über einen Abgastrakt 14 der Brennkraftmaschine 1 abgeführt. Der Brennraum 5 wird mittels eines Auslassventils 15 mit dem Abgastrakt 14 wahlweise verbunden oder von diesem getrennt. Die Abgase werden in einem Abgasreinigungskatalysator 16 gereinigt.

Der Brennkraftmaschine 1 ist ferner eine Kraftstoffversorgungseinrichtung zugeordnet mit einem Kraftstofftank 18, einer Kraftstoffpumpe 19, einer Hochdruckpumpe 20, einem Druckspeicher 21 und zumindest einem steuerbaren Einspritzventil 22. Der Kraftstofftank 18 weist einen verschließbaren Einfüllstutzen 23 zum Einfüllen von Kraftstoff auf. Der Kraftstoff wird mittels der Kraftstoffpumpe 19 über eine Kraftstoffversorgungsleitung 24 dem Einspritzventil 22 zugeführt. In der Kraftstoffversorgungsleitung 24 sind die Hochdruckpumpe 20 und der Druckspeicher 21 angeordnet. Die Hochdruckpumpe 20 hat die Aufgabe, dem Druckspeicher 21 den Kraftstoff mit hohem Druck zuzuführen. Der Druckspeicher 21 ist dabei als gemeinsamer Druckspeicher 21 für alle Einspritzventile 22 ausgebildet. Von ihm aus werden alle Einspritzventile 22 mit druckbeaufschlagtem Kraftstoff versorgt. Im Ausführungsbeispiel handelt es sich um eine Brennkraftmaschine 1 mit Kraftstoffdirekteinspritzung, bei der der Kraftstoff mittels eines in den Brennraum 5 ragenden Einspritzventils 22 direkt in den Brennraum 5 eingespritzt wird. Es wird jedoch darauf hingewiesen, dass die vorliegende Erfindung nicht auf diese Art der Kraftstoffeinspritzung beschränkt ist, sondern auch auf andere Arten der Kraftstoffeinspritzung, wie beispielsweise Saugrohreinspritzung, anwendbar ist.

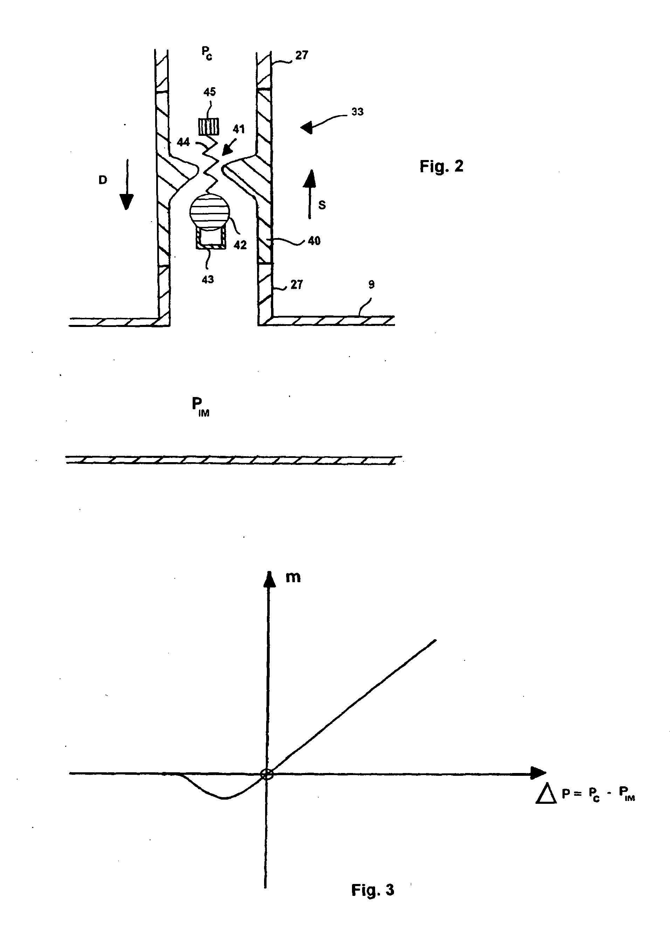

Der Brennkraftmaschine 1 ist ferner eine Tankentlüftungsvorrichtung zugeordnet. Zu der Tankentlüftungsvorrichtung gehört ein Kraftstoffdämpfespeicher 25, welcher beispielsweise als Aktivkohlebehälter ausgebildet ist und über eine Verbindungsleitung 26 mit dem Kraftstofftank 18 verbunden ist. Die in dem Kraftstofftank 18 entstehenden Kraftstoffdämpfe werden in den Kraftstoffdämpfespeicher 25 geleitet und dort von der Aktivkohle adsorbiert. Der Kraftstoffdämpfespeicher 25 ist über eine Entlüftungsleitung 27 mit dem Saugrohr 9 der Brennkraftmaschine 1 verbunden. In der Entlüftungsleitung 27 befinden sich ein steuerbares Tankentlüftungsventil 28 und ein Sicherheitsventil 33, dessen Aufbau und Funktionsweise anhand der Figuren 2 und 3 näher erläutert. Ferner kann dem Kraftstoffdämpfespeicher 25 über eine Belüftungsleitung 29 und ein optional darin angeordnetes steuerbares Belüftungsventil 30 Frischluft zugeführt werden. Die Tankentlüftungsvorrichtung umfasst einen Druckschalter 32, welcher derart ausgebildet ist, dass er sich im voll funktionsfähigen Zustand in einer Hochdruck-Schaltstellung befindet, falls der Druck in der Tankentlüftungsvorrichtung größer einem Druckschwellwert ist, und sich ansonsten in einer Niederdruck-Schaltstellung befindet. Der Druckschwellwert liegt typischerweise 3mbar unterhalb des Umgebungsdrucks. In bestimmten Betriebsbereichen der Brennkraftmaschine 1, insbesondere im Leerlauf oder bei Teillast, herrscht aufgrund des starken Drosseleffekts durch die Drosselklappe 7 ein im Saugrohr 9 ein hoher Unterdruck. Durch Öffnen des Tankentlüftungsventils und des Belüftungsventils 30 während eines Tankentlüftungszeitraums kommt es daher zu einem Spüleffekt, bei dem die in dem Kraftstoffdämpfespeicher 25 gespeicherten Kraftstoffdämpfe in das Saugrohr 9 geleitet werden und an der Verbrennung teilnehmen. Auf diese Weise wird der Kraftstoffdämpfespeicher regeneriert.

Der Brennkraftmaschine 1 ist eine Steuervorrichtung 31 zugeordnet, in welcher kennfeldbasierte Motorsteuerungsfunktionen (KF1 bis KF5) in Form von Software implementiert sind. Die Steuervorrichtung 31 ist mit sämtlichen Aktuatoren und Sensoren der Brennkraftmaschine 1 über Signal- und Datenleitungen verbunden. Insbesondere ist die Steuervorrichtung 31 mit dem steuerbaren Belüftungsventil 30, dem steuerbaren Tankentlüftungsventil 28, dem Saugrohrdrucksensor 9, der steuerbaren Drosselklappe 7, dem steuerbaren Einspritzventil 22, der Zündkerze 11, dem Drehzahlsensor 13 und dem Druckschalter 32 verbunden.

In Figur 2 ist ein Ausführungsbeispiel des Sicherheitsventils 33 und dessen Anordnung in der Entlüftungsleitung 27 schematisch dargestellt. Das Sicherheitsventil 33 weist ein Gehäuse 40 auf, und ist innerhalb der Entlüftungsleitung 27 montiert. Ein mittlerer Abschnitt des Gehäuses 40 des Sicherheitsventils 33 ist derart ausgeformt, bzw. ausgebuchtet, dass der Strömungsquerschnitt eine kreisrunde Verengung 41 aufweist. Innerhalb des Strömungsquerschnitts weist das Sicherheitsventil 33 einen beweglichen Verschlusskörper 42 (im Ausführungsbeispiel als Kugelkörper ausgebildet), einen Verschlusskörpersitz 43, eine Feder 44 und eine Federverankerung 45 auf, welche fest mit dem Gehäuse 40 des Sicherheitsventils 33 verbunden ist. Die Feder 44 ist an einer Seite mit der Federverankerung 45, an der anderen Seite mit dem Verschlusskörper 42 fest verbunden. Dabei wirkt die Federkraft derart, dass der Verschlusskörper 42 in den Verschlusskörpersitz 43 gedrückt wird. Die Geometrie des Verschlusskörpers 42 ist derart gewählt, dass in dem Fall, dass der Verschlusskörper 42 entgegen der Federkraft auf die durch das Gehäuse 40 des Sicherheitsventils 33 gebildete Verengung 41 des Strömungsquerschnitts gedrückt wird, der Strömungsquerschnitt vollständig abgedichtet wird, so dass kein Gasdurchfluss mehr möglich ist.

In Figur 2 ist mit dem Bezugszeichen P_{IM} der Druck im Saugrohr 9 mit dem Bezugszeichen P_{C} der Druck am Tankentlüftungsventil 28 bezeichnet. Ferner ist mit dem Pfeil S die Sperrrichtung des Sicherheitsventils 33 vom Saugrohr 9 zum Tankentlüftungsventil 28 bezeichnet. Mit dem Pfeil D ist die Durchlassrichtung des Sperrventils 33 vom Tankentlüftungsventil 28 zum Saugrohr 9 bezeichnet.

In Figur 3 ist die Kennlinie des in Figur 2 dargestellten Sperrventils schematisch dargestellt. In dem Diagramm ist der Gasdurchfluss ṁ durch das Sperrventil 33 gegen die Druckdifferenz ΔP zwischen dem Druck P_{c} am Tankentlüftungsventil 28 und dem Druck P_{IM} im Saugrohr dargestellt. Wie zu erkennen ist, ergibt sich bei einer positiven Druckdifferenz (Druck P_{C} am Tankentlüftungsventil 28 ist größer als der Druck P_{IM} im Saugrohr 9) ein Gasdurchfluss ṁ durch das Sicherheitsventil in der Durchlassrichtung D. Da in diesem Fall der Druck P_{C} am Tankentlüftungsventil 28 größer ist als der Druck P_{IM} im Saugrohr 9 wird der Verschlusskörper aufgrund des Druckgefälles vom Tankentlüftungsventil 28 zum Saugrohr 9 und daneben durch die Federkraft der Feder 44 in den Verschlusskörpersitz 43 gedrückt. Dadurch ist der Strömungsquerschnitt im Sicherheitsventil 33 freigegeben und Gas kann in der Durchlassrichtung vom Tankentlüftungsventil 28 zum Saugrohr 9 strömen. Unter diesen Druckbedingungen, d. h. bei einem ausreichenden Unterdruck im Saugrohr 9 gegenüber dem Druck in der Tankentlüftungsvorrichtung, ist ein Tankentlüftungsvorgang durch Öffnen des Tankentlüftungsventils 28 möglich.

Wie aus Figur 2 weiter hervorgeht ist bei einer Druckdifferenz ΔP = 0 auch der Gasstrom durch das Sicherheitsventil 33 m = 0.

Bei einer negativen Druckdifferenz ΔP (Druck P_{C} am Tankentlüftungsventil 28 ist kleiner als Druck P_{IM} im Saugrohr 9) wirkt durch das Druckgefälle vom Saugrohr 9 zum Tankentlüftungsventil 28 eine Kraft auf den Verschlusskörper 42 entgegen der Federkraft. Die Feder 44 ist derart ausgestaltet, dass ein Gasdurchfluss durch das Sperrventil 33 in der Sperrrichtung S bis zum Erreichen eines bestimmten Überdrucks im Saugrohr gegenüber dem Druck P_{C} am Tankentlüftungsventil 28 möglich ist. Steigt der Druck P_{IM} im Saugrohr 9 gegenüber dem Druck P_{C} am Tankentlüftungsventil 28 weiter an, so steigt auch die Kraft auf den Verschlusskörper 42 entgegen der Federkraft weiter an. Ab einem bestimmten Überdruck im Saugrohr gegenüber dem Druck am Tankentlüftungsventil 28 ist die Kraft auf den Verschlusskörper 42 größer als die Federkraft, so dass dieser auf die Verengung 41 des Strömungsquerschnitts des Sicherheitsventils 33 gepresst wird und dieses abdichtet. Ab diesem Zeitpunkt ist kein Durchfluss durch das Sperrventil 33 in der Sperrrichtung S mehr möglich.

Durch das erfindungsgemäße Sicherheitsventil ist daher ein Gasdurchfluss in der Sperrrichtung S bis zu einem bestimmten Überdruck im Saugrohr 9 gegenüber dem Druck am Tankentlüftungsventil 28 möglich. Steigt der Überdruck im Saugrohr 9 gegenüber dem Druck am Tankentlüftungsventil 28 darüber hinaus an, so schließt das Sicherheitsventil 33 den Strömungsquerschnitt und ein Gasdurchfluss vom Saugrohr 9 in Richtung des Tankentlüftungsventils 28 (Sperrrichtung S) wird unterbunden. Dadurch wird das Tankentlüftungsventil 28 bei zu hohem Druck im Saugrohr 9 vor Beschädigung sicher geschützt. Bei einem geringen Überdruck im Saugrohr 9 gegenüber dem Druck am Tankentlüftungsventil 28 kann durch öffnen des Tankentlüftungsventils 28 ein Druckausgleich zwischen dem Saugrohr und der Tankentlüftungsvorrichtung erfolgen.

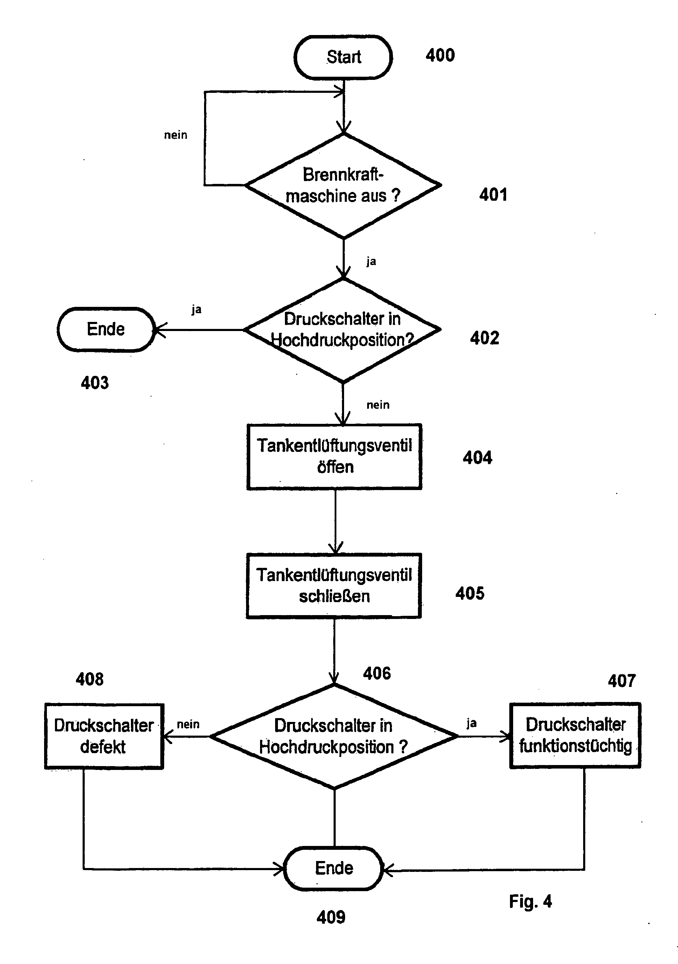

Ein Ausführungsbeispiel eines Steuerverfahrens für die aufgeladene Brennkraftmaschine 1 mit der erfindungsgemäßen Tankentlüftungsvorrichtung (siehe Figur 1) wird anhand der Figur 4 erläutert.

Das Verfahren wird in Schritt 400, beispielsweise beim Anlassen der Brennkraftmaschine 1, gestartet. In Schritt 401 wird überwacht, ob die Brennkraftmaschine 1 abgeschaltet wird. Ist dies nicht der Fall, d.h. die Brennkraftmaschine bleibt in Betrieb, wird die Abfrage wiederholt. Wird jedoch in Schritt 401 erkannt, dass die Brennkraftmaschine 1 ausgeschaltet wurde, so fährt das Verfahren mit Schritt 402 fort, in dem überprüft wird, ob sich der Druckschalter 32 der Tankentlüftungsvorrichtung in der Hochdruck-Schaltstellung befindet. Ist dies der Fall, wird das Verfahren mit Schritt 403 beendet. Dadurch wird verhindert, dass durch Öffnen des Tankentlüftungsventils 28 Kraftstoffdämpfe in den Ansaugtrakt 4 und in die Umgebung gelangen.

Wird in Schritt 402 jedoch erkannt, dass sich der Druckschalter 32 nicht in der Hochdruck-Schaltstellung sondern in der Niederdruck-Schaltstellung befindet, so fährt das Verfahren mit Schritt 404 fort, in dem das Tankentlüftungsventil 28 nach Ablauf einer gewissen Zeit nach dem Stillstand der Brennkraftmaschine 1 geöffnet wird. Bei Stillstand der Brennkraftmaschine und Ablauf der gewissen Zeitspanne herrscht nun im Saugrohr 9 im Wesentlichen Umgebungsdruck. Da sich der Druckschalter 32 der Tankentlüftungsvorrichtung in der Niederdruck-Schaltstellung befindet, herrscht in der Tankentlüftungsvorrichtung ein Druck, welcher geringer ist als Umgebungsdruck. Folglich herrscht im Saugrohr 9 ein höherer Druck P_{IM} als in der Tankentlüftungsvorrichtung. Durch das Öffnen des Tankentlüftungsventils 28 nimmt der Druck P_{C} am Tankentlüftungsventil 28 im Wesentlichen den Wert des Drucks im Kraftstofftank 19 oder im Kraftstoffdämpfespeicher 25 an, so dass der Druck P_{C} am Tankentlüftungsventil geringer ist als der Druck P_{IM} im Saugrohr bzw. der Umgebungsdruck. Es herrscht also ein Überdruck im Saugrohr 9 gegenüber dem Druck P_{C} am Tankentlüftungsventil und dem Druck in der Tankentlüftungsvorrichtung (Kraftstofftank und Kraftstoffdämpfespeicher). Ist dieser Überdruck geringer als der anhand von Figur 3 erläuterte bestimmte Überdruck, bis zu welchem das Sicherheitsventil 33 eine Gasströmung in Sperrrichtung erlaubt, ist der Strömungsquerschnitt 41 am Sicherheitsventil 33 freigegeben und es kommt zu einem Druckausgleich zwischen dem Saugrohr 9 und der Tankentlüftungsvorrichtung. Dies bedeutet, dass sich nach Ablauf einer gewissen Zeit nach dem Öffnen des Tankentlüftungsventils 28 in der gesamten Tankentlüftungsvorrichtung Umgebungsdruck einstellt.

Nach Ablauf einer vorgegebenen Zeitspanne nach dem Öffnen des Tankentlüftungsventils 28 wird dieses in Schritt 405 geschlossen.

Das Verfahren fährt mit Schritt 406 fort, in dem die Position des Druckschalters 32 überprüft wird. Wird erkannt, dass sich der Druckschalter 32 nun in der Hochdruck-Schaltstellung befindet, so wird dieser in Schritt 406 als funktionstüchtig deklariert. Durch das Öffnen des Tankentlüftungsventils 28 und den dadurch verursachten Druckausgleich zwischen dem Saugrohr 9 und der Tankentlüftungsvorrichtung herrscht innerhalb dieser nun Umgebungsdruck so dass sich der Druckschalter 32 im funktionstüchtigen Zustand in der Hochdruck-Schaltstellung befinden muss.

Wird hingegen im Schritt 406 erkannt, dass sich der Druckschalter 32 nicht in der Hochdruck-Schaltstellung sondern in der Niederdruck-Schaltstellung befindet, so wird der Druckschalter in Schritt 407 als defekt deklariert. In diesem Fall kann beispielsweise eine Eintragung in den Fehlerspeicher und/oder ein Warnsignal an den Fahrzeugführer ausgegeben werden. Im Anschluss an die Schritte 408 oder Schritt 407 wird das Verfahren mit Schritt 408 beendet.

Die erfindungsgemäße Tankentlüftungsvorrichtung und das erfindungsgemäße Steuerverfahren erlauben auch bei aufgeladenen Brennkraftmaschinen 1 eine Diagnose der Funktionstüchtigkeit des Druckschalters 32 der Tankentlüftungsvorrichtung. Dieses insbesondere auf die spezielle Ausgestaltung des Sicherheitsventils 33 zurückzuführen, welches einen Druckausgleich zwischen dem Saugrohr 9 und der Tankentlüftungsvorrichtung bei Stillstand der Brennkraftmaschine 1 zulässt. Gleichzeitig wird durch die spezielle Ausgestaltung des Sicherheitsventils 33 verhindert, dass während des Betriebs der Brennkraftmaschine 1 im aufgeladenen Betriebsbereich (Druck im Saugrohr P_{IN} ist wesentlich größer als Umgebungsdruck) das Tankentlüftungsventil 28 vor Beschädigung geschützt wird.

## Patentansprüche

1. Tankentlüftungsvorrichtung für eine aufgeladene Brennkraftmaschine (1), welche aufweist:
- einen Kraftstofftank (18),
- einen Kraftstoffdämpfespeicher (25), welcher über eine Verbindungsleitung (26) mit dem Kraftstofftank (18) und über eine Entlüftungsleitung (27) mit einem Saugrohr (9) der Brennkraftmaschine (1) verbunden ist,
- einem Tankentlüftungsventil (28), welches in der Entlüftungsleitung (27) angeordnet ist, und **dadurch gekennzeichnet dass**,
- ein Sicherheitsventil (33), welches in der Entlüftungsleitung (27) zwischen dem Tankentlüftungsventil (28) und dem Saugrohr (9) angeordnet ist, wobei das Sicherheitsventil (33) derart ausgestaltet ist, dass es einen Gasfluss in einer Sperrrichtung (S) vom Saugrohr (9) zum Tankentlüftungsventil (28) bis zum Erreichen eines bestimmten Überdrucks im Saugrohr (9) gegenüber dem Druck am Tankentlüftungsventil (28) zulässt.

2. Verfahren zum Steuern einer aufgeladenen Brennkraftmaschine (1) mit einer Tankentlüftungsvorrichtung gemäß Anspruch 1, **dadurch gekennzeichnet dass**,
- nach dem Abschalten der Brennkraftmaschine (1) das Tankentlüftungsventil (28) derart geöffnet wird, sodass ein Druckausgleich zwischen Kraftstofftank (18) und dem Saugrohr (9) ermöglicht wird,
- die Stellung eines Druckschalters (32) erfasst wird, welcher derart ausgebildet ist, dass er sich bei einem erfolgten Druckausgleich zwischen dem Kraftstofftank (18) und dem Saugrohr (9) in einer Hochdruck-Schaltstellung befindet,
- ein Defekt des Druckschalters (32) erkannt wird, falls sich der Druckschalter (32) nach dem Öffnen des Tankentlüftungsventils (28) nicht in der Hochdruck-Schaltstellung befindet.

3. Verfahren nach Anspruch 2, wobei ein Defekt des Druckschalters (32) nur dann erkannt wird, wenn er sich nach Ablauf einer vorgegebenen Zeitspanne nach Öffnen des Tankentlüftungsventils (28) nicht in der Hochdruck-Schaltstellung befindet.

4. Verfahren nach einem der Ansprüche 2 bis 3, wobei das Tankentlüftungsventil (28) nicht geöffnet wird, wenn sich der Druckschalter (32) bereits vor dem Öffnen des Tankentlüftungsventils (28) in der Hochdruck-Schaltstellung befindet.

## Claims

1. Tank venting apparatus for a supercharged internal combustion engine (1), which comprises:
- a fuel tank (18),
- a fuel vapour reservoir (25), which is connected to the fuel tank (18) by way of a connecting line (26) and to an inlet manifold (9) of the internal combustion engine (1) by way of a venting line (27),
- a tank venting valve (28), which is arranged in the venting line (27), **characterized by**
- a safety valve (33), which is arranged in the venting line (27) between the tank venting valve (28) and the inlet manifold (9), the safety valve (33) being designed in such a way that it permits a gas flow in a closing direction (S) from the inlet manifold (9) to the tank venting valve (28), until a specific excess pressure is reached in the inlet manifold (9) relative to the pressure at the tank venting valve (28).

2. Method for controlling a supercharged internal combustion engine (1) having a tank venting apparatus according to Claim 1, **characterized in that**
- after switching off the internal combustion engine (1) the tank venting valve (28) is opened in such a way that pressure equalization is permitted between the fuel tank (18) and the inlet manifold (9),
- the position of a pressure switch (32) is registered, the switch being designed in such a way that on completion of pressure equalization between the fuel tank (18) and the inlet manifold (9) it is situated in a high-pressure switching position,
- a defect of the pressure switch (32) is detected if the pressure switch (32) is not situated in the high-pressure switching position after opening of the tank venting valve (28).

3. Method according to Claim 2, wherein a defect of the pressure switch (32) is identified only if it is not situated in the high-pressure switching position once a predefined period of time has elapsed following opening of the tank venting valve (28).

4. Method according to either of Claims 2 to 3, wherein the tank venting valve (28) is not opened if the pressure switch (32) is already situated in the high-pressure switching position prior to opening of the tank venting valve (28).

## Revendications

1. Dispositif de dégazage de réservoir pour un moteur à combustion interne suralimenté (1) comprenant :
un réservoir à carburant (18),
un accumulateur de vapeur de carburant (25), qui est relié par une ligne de liaison (26) au réservoir de carburant (18) et par une ligne de dégazage (27) à un tube d'admission (9) du moteur à combustion interne (1),
une soupape de dégazage de réservoir (28) qui est agencée dans la ligne de dégazage (27), et **caractérisé en ce qu'**une soupape de sécurité (33), qui est agencée dans la ligne de dégazage (27) entre la soupape de dégazage de réservoir (28) et le tube d'admission (9), ladite soupape de sécurité (33) étant conçue de façon qu'elle admette un écoulement gazeux dans un sens d'état bloqué (S) provenant du tube d'admission (9) vers la soupape de dégazage de réservoir (28) jusqu'à obtention d'une surpression déterminée dans le tube d'admission (9) par rapport à la pression régnant dans la soupape de dégazage de réservoir (28).

2. Procédé de commande d'un moteur à combustion interne suralimenté (1) ayant un dispositif de dégazage de réservoir selon la revendication 1, **caractérisé en ce qu'**après l'arrêt du moteur à combustion interne (1), la soupape de dégazage de réservoir (28) est ouverte de façon à rendre possible une égalisation de pression entre le réservoir de carburant (18) et le tube d'admission (9),
la position d'un commutateur de pression (32) est déterminée, lequel commutateur est conçu de telle façon qu'après l'égalisation de pression entre le réservoir de carburant (18) et le tube d'admission (9), il se trouve dans une position de commutation à haute pression,
un défaut du commutateur de pression (32) est détecté, si le commutateur de pression (32) ne se trouve pas dans la position de commutation à haute pression après l'ouverture de la soupape de dégazage de réservoir (28).

3. Procédé selon la revendication 2, dans lequel un défaut du commutateur de pression (32) est détecté uniquement s'il ne se trouve pas dans la position de commutation à haute pression après l'écoulement d'une période de temps prédéterminée suivant l'ouverture de la soupape de dégazage de réservoir (28).

4. Procédé selon l'une quelconque des revendications 2 à 3, dans lequel la soupape de dégazage de réservoir (28) n'est pas ouverte si le commutateur de pression (32) se trouve déjà dans la position de commutation à haute pression avant l'ouverture de la soupape de dégazage de réservoir (28).
